# FASCICULE DE BREVET EUROPEEN

(11) **EP 2 808 724 B1**
(45) Date de publication et mention de la délivrance du brevet: **06.04.2016**
(21) Numéro de dépôt: 14169892.8
(22) Date de dépôt: 26.05.2014
(51) Int. Cl.: G02B 27/01, H04N 9/31, G02F 1/1335, G02B 27/00

(54) **Dispositif d'affichage d'images en réalité augmentée**
Anzeigeanordnung für erweiterte Realität
Display assembly of the augmented-reality type

(30) Priorité: 30.05.2013 FR 1354947
(43) Date de publication de la demande: 03.12.2014
(73) Titulaire: COMMISSARIAT A L'ENERGIE ATOMIQUE ET AUX ENERGIES ALTERNATIVES, 75015 Paris (FR)
(72) Inventeur: Rossini, Umberto, 38500 Coublevie (FR)
(74) Mandataire: Thibon, Laurent

(56) Documents cités:
- EP-A1- 0 677 970
- WO-A1-2007/052183
- US-A1- 2012 154 920

## Description

### Domaine

La présente demande concerne un dispositif d'affichage d'images en réalité augmentée, et vise plus particulièrement un dispositif destiné à être porté sur la tête, par exemple un dispositif de type lunettes ou masque.

### Exposé de l'art antérieur

L'affichage d'images en réalité augmentée consiste à superposer, à une image du monde réel, une image contenant des informations supplémentaires à l'attention d'un observateur, par exemple des informations sur son environnement, sa position, sa vitesse de déplacement, etc.

Les dispositifs d'affichage en réalité augmentée destinés à être portés sur la tête sont généralement désignés par l'acronyme HMD, de l'anglais "Head Mounted Display". De tels dispositifs peuvent comprendre une lame semi-transparente placée à quelques millimètres ou centimètres de l'oeil d'un utilisateur et inclinée à 45 degrés par rapport à l'axe optique moyen de l'oeil, à travers laquelle l'utilisateur peut voir en transparence une scène réelle. Un système de projection miniaturisé permet d'afficher des informations sur la lame semi transparente, de façon que ces informations soient perçues par l'utilisateur comme étant intégrées à la scène réelle vue à travers la lame. Un exemple d'un tel dispositif est décrit dans le document US2012/0154920.

Les dispositifs existants présentent toutefois divers inconvénients, résidants notamment dans l'encombrement important, la complexité, et la consommation électrique élevée du système de projection.

### Résumé

Un objet d'un mode de réalisation est de prévoir un dispositif d'affichage d'images en réalité augmentée de type HMD, palliant tout ou partie des inconvénients des dispositifs existants.

Ainsi, un mode de réalisation prévoit un dispositif d'affichage d'une image en réalité augmentée de type HMD, comprenant : un ensemble de pixels d'affichage lumineux disposés sur une première face d'un support transparent destiné à être positionné sur le trajet optique entre un oeil d'un utilisateur et une scène réelle à observer, cet ensemble comprenant un nombre N entier supérieur à 1 de sous-ensembles de pixels comprenant chacun un nombre de pixels suffisant pour afficher la totalité de l'image ; et un système optique disposé sur une deuxième face du support opposée à la première face, ce système comprenant N sous-systèmes optiques, chaque sous-ensemble de pixels étant en regard de l'un des sous-systèmes optiques.

Selon un mode de réalisation, en vue de face, les sous-systèmes optiques voisins sont jointifs.

Selon un mode de réalisation, les pixels sont non jointifs et l'espacement interpixels est compatible avec la visualisation d'une scène réelle en transparence à travers le support.

Selon un mode de réalisation, en vue de face, chaque pixel est placé dans une partie centrale d'une surface libre de tout autre pixel, de façon que la surface du support effectivement occupée par les pixels ne dépasse pas 20 pourcents de la surface totale de la face du support sur laquelle sont disposés les pixels.

Selon un mode de réalisation, à un instant donné, seule une portion de chaque sous-ensemble de pixels, visible par l'oeil depuis une boîte à oeil déterminée, est activée.

Selon un mode de réalisation, la portion activée a une dimension d'approximativement f*(Len+B)/e, où f est la distance focale du sous-système optique correspondant, Len est le diamètre du sous-système optique correspondant, B est la dimension de la boîte à oeil, et e est le trajet optique entre le système optique et l'oeil.

Selon un mode de réalisation, le dispositif comprend en outre un dispositif de suivi de regard permettant de connaître, à chaque instant, la position relative de l'oeil de l'utilisateur par rapport au dispositif d'affichage, et un circuit de contrôle adapté, dans chaque sous-ensemble de pixels, à activer ou désactiver des pixels en fonction de la position de l'oeil détectée.

Selon un mode de réalisation, chaque sous-ensemble de pixels s'étend sur une surface sensiblement égale à celle du sous-système optique en regard duquel il se trouve.

Selon un mode de réalisation, chaque sous-ensemble de pixels contient un nombre de pixels suffisant pour afficher une image d'approximativement 320 par approximativement 240 pixels.

Selon un mode de réalisation, les sous-systèmes optiques sont tous sensiblement identiques, la dimension Len, dans une direction donnée parallèle au support, d'un sous-système optique, étant approximativement égale à la valeur Q*f*Len/e, où Q est le nombre de sous-systèmes optiques dans ladite direction, f est la distance focale desdits sous-systèmes optiques, et e est le trajet optique entre le système optique et l'oeil d'un utilisateur.

Selon un mode de réalisation, le nombre Q de sous-systèmes optiques, dans une direction donnée parallèle audit support, est au moins égal à l'entier supérieur à la valeur e/f, où e désigne le trajet optique entre le système optique et l'oeil d'un utilisateur, et f désigne la distance focale des sous-systèmes optiques.

Selon un mode de réalisation, les pixels de l'ensemble de pixels sont disposés en matrice et régulièrement répartis sur toute la surface du support.

Selon un mode de réalisation, les pixels sont réalisés en technologie OLED.

Selon un mode de réalisation, l'ensemble de pixels est dans le plan focal objet du système optique.

Selon un mode de réalisation, le support est une lame transparente d'épaisseur inférieure ou égale à 3,5 millimètres.

Selon un mode de réalisation, le système optique est réalisé sous la forme d'un hologramme réflectif.

Selon un mode de réalisation, le dispositif d'affichage a la forme générale d'une paire de lunettes ou d'un masque.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe schématique illustrant un exemple d'un mode de réalisation d'un dispositif d'affichage d'images en réalité augmentée ;
les figures 2, 3 et 4 illustrent des exemples de règles géométriques pour la conception d'un dispositif du type décrit en relation avec la figure 1 ; et
la figure 5 est une vue en coupe partielle illustrant un exemple d'une variante de réalisation d'un dispositif d'affichage d'images en réalité augmentée.

Par souci de clarté, de mêmes éléments ont été désignés par de mêmes références aux différentes figures et, de plus, comme cela est habituel dans la représentation des systèmes optiques, les diverses figures ne sont pas tracées à l'échelle.

### Description détaillée

Dans la suite de la description, sauf indication contraire, les termes "approximativement", "sensiblement", "environ" et "de l'ordre de" signifient "à 10 % près".

Selon un aspect d'un mode de réalisation, on prévoit un dispositif d'affichage d'images en réalité augmentée comportant, sur une face d'un support transparent destinée à être placée à quelques millimètres ou centimètres de l'oeil d'un utilisateur, des pixels d'affichage lumineux. Le support transparent, par exemple une lame transparente, peut être monté de façon à former un angle d'approximativement 90 degrés avec l'axe optique moyen de l'oeil, par exemple à la façon d'un verre de lunettes ou d'un écran de masque. Les dimensions des pixels et l'espacement entre les pixels sont choisis de façon à permettre la visualisation d'une scène réelle en transparence à travers le support. Les pixels permettent d'ajouter des informations à l'image de la scène réelle vue à travers le support. Un système optique peut être prévu sur le trajet optique entre les pixels et l'oeil, pour que les informations affichées par les pixels soient perçues par l'utilisateur comme étant à la même distance que la scène réelle (par exemple à l'infini). L'utilisateur n'a ainsi pas à faire d'effort d'accommodation, ce qui limite la fatigue visuelle de ce dernier.

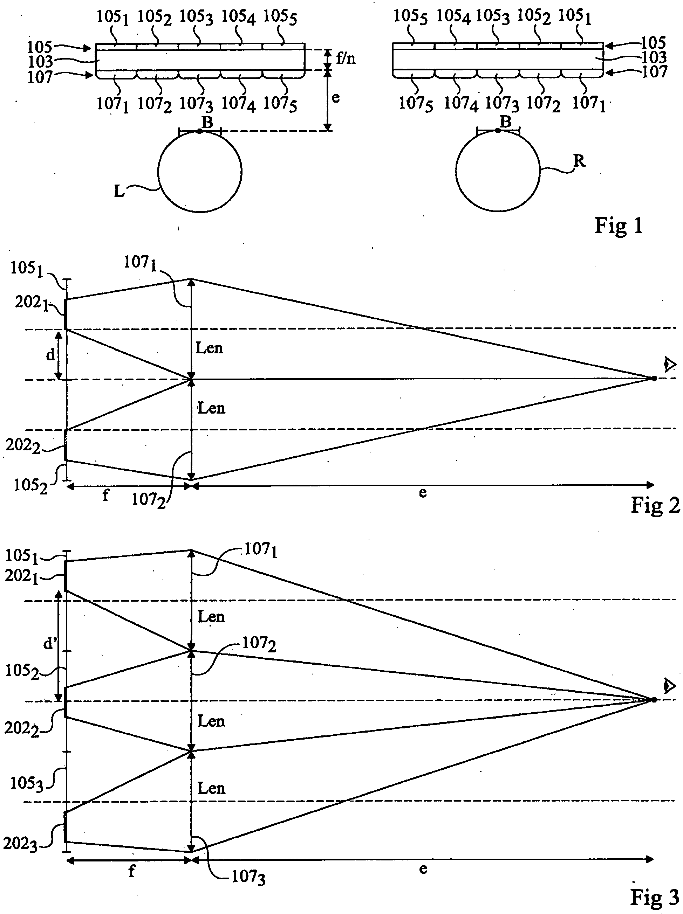

La figure 1 une vue en coupe schématique illustrant un exemple d'un mode de réalisation d'un dispositif d'affichage d'images en réalité augmentée. Le dispositif de la figure 1 a la forme générale d'une paire de lunettes. En regard de chacun des yeux gauche L et droit R de l'utilisateur, se trouve un afficheur 101 comprenant un support transparent 103, par exemple une lame transparente telle qu'une lame de verre, et, sur une face du support 103 (opposée à l'oeil dans l'exemple représenté), un ensemble 105 de pixels d'affichage lumineux, par exemple des pixels OLED (de l'anglais "Organic Light Emitting Diode" - diode électroluminescente organique), définissant une source d'images. Les afficheurs peuvent être fixés sur une monture de type monture de lunettes, non représentée. Les dimensions des pixels et l'espacement entre les pixels sont choisis pour permettre la visualisation d'une scène réelle en transparence à travers le support 103. A titre d'exemple, en vue de face, chaque pixel a une forme générale approximativement carrée d'environ 1 à 10 µm de côté, les bords de pixels voisins étant séparés par une distance non nulle, par exemple comprise entre 5 et 15 µm. Dans un mode de réalisation préféré, en vue de face, chaque pixel est placé dans une partie centrale d'une surface libre de tout autre pixel, de façon que la surface effectivement occupée par le pixel (c'est-à-dire la surface ne laissant pas passer la lumière provenant de la scène réelle) ne dépasse pas 20 pourcents de cette surface libre. Chaque afficheur 101 comprend en outre, sur une face du support 103 opposée à la source d'images 105 (c'est-à-dire côté oeil dans l'exemple représenté), un système optique 107 adapté à ce que les informations affichées par la source d'images 105 soient perçues par l'utilisateur comme étant à la même distance de l'utilisateur que la scène réelle (par exemple collimatées à l'infini).

Une contrainte importante à respecter est de tenir compte des mouvements possibles de l'oeil de l'utilisateur devant l'afficheur 101, et donc de prévoir un système optique 107 dont la pupille de sortie est suffisamment large pour que les mouvements de l'oeil devant l'afficheur 101 n'impliquent pas une perte de l'information affichée par les pixels. Une autre contrainte est de prévoir un afficheur relativement compact. En particulier, la distance focale du système optique 107 doit de préférence être relativement faible.

Pour obtenir un afficheur 101 simple et compact et présentant une pupille de sortie de taille importante, on prévoit ici de diviser l'afficheur 101 en plusieurs sous-afficheurs parallèles.

Le système optique 107 est divisé en plusieurs sous-systèmes optiques. Dans la vue en coupe de la figure 1, le système optique 107 est divisé en cinq sous-systèmes optiques 107₁, 107₂, 107₃, 107₄ et 107₅ identiques. On notera que ce nombre peut être plus ou moins important. Dans l'exemple représenté, chaque sous-système optique 107ᵢ (avec i entier allant de 1 à 5 dans cet exemple) est constitué par une lentille située sur la face du support 103 opposée à la source d'images 105. Dans cet exemple, la source d'images 105 est placée sensiblement dans le plan focal objet des sous-systèmes optiques 107ᵢ, de façon que les images affichées en réalité augmentée soient collimatées à l'infini. Dans le dispositif de la figure 1, la distance entre la source d'images 105 et le système optique 107 est fixée par l'épaisseur de la lame transparente 103. On choisit donc la lame 103 telle que son épaisseur, multipliée par son indice optique n, soit approximativement égale à la distance focale f des sous-systèmes optiques 107ᵢ. Les modes de réalisation décrits ne se limitent toutefois pas à ce cas particulier, et on pourra prévoir de placer la source d'image 105 à une distance optique équivalente du système optique 107 supérieure ou inférieure à sa distance focale f. Pour des questions d'encombrement et d'esthétique, l'épaisseur de la lame 103 est de préférence choisie inférieure ou égale à 5 millimètres, par exemple inférieure ou égale à 3,5 millimètres.

L'ensemble de pixels 105 est divisé en autant de sous-ensembles de pixels que l'afficheur comprend de sous-systèmes optiques 107ᵢ. Chaque sous-ensemble de pixels définit une source d'images élémentaire et est associé à l'un des sous-systèmes optiques 107ᵢ du système 107. Dans la vue en coupe de la figure 1, cinq sources d'images élémentaires 105₁, 105₂, 105₃, 105₄ et 105₅ sont représentées, ces sources élémentaires étant respectivement situées en regard des sous-systèmes optiques 107₁, 107₂, 107₃, 107₄ et 107₅.

On appellera ici un sous-afficheur l'ensemble formé d'un sous-ensemble 105ᵢ de pixels et du sous-système optique 107ᵢ associé. L'afficheur 101 comprend donc une pluralité de sous-afficheurs parallèles.

Eh formant plusieurs sous-afficheurs parallèles, on peut obtenir un afficheur complet présentant une pupille de sortie totale (somme des tailles des pupilles de sortie de chacun, des sous-afficheurs) de taille importante, tout en formant des sous-systèmes optiques simples et compacts.

L'afficheur 101 peut être prévu de façon que chaque sous-afficheur affiche une partie de l'information, l'information complète étant recombinée par les sous-systèmes optiques 107ᵢ au niveau de l'oeil de l'utilisateur.

Toutefois, dans un mode de réalisation préféré, chaque sous-ensemble 105ᵢ de pixels contient un nombre de pixels suffisant pour afficher la totalité de l'image que l'on souhaite superposer à la scène réelle. Comme cela sera expliqué plus en détail en relation avec les figures 2 à 4, cette redondance de pixels permet d'obtenir une très bonne tolérance du dispositif aux mouvements de l'oeil de l'utilisateur, et d'éviter dans une large mesure que des mouvements de l'oeil de l'utilisateur n'entrainent une perte d'information pour l'utilisateur. A titre d'exemple, chaque sous-ensemble 105ᵢ de pixels contient un nombre de pixels suffisant pour afficher une image ayant une résolution d'approximativement 320 par approximativement 240 pixels.

Pour obtenir une bonne lisibilité de l'information affichée en réalité augmentée, les lentilles des sous-systèmes optiques 107ᵢ sont de préférence, en vue de dessus, jointives, pour qu'il n'existe pas d'espace entre les images ou portions d'images émises par les sous-afficheurs, et que l'utilisateur perçoive l'information affichée de façon continue. Bien entendu, le caractère jointif des lentilles est défini dans la limite de tolérance de la pupille de l'oeil. Ainsi, un faible écart entre les lentilles peut être acceptable. En vue de dessus, les lentilles 107ᵢ ont par exemple une forme approximativement carrée ou rectangulaire.

Les figures 2, 3 et 4 illustrent des exemples de règles géométriques permettant de mieux comprendre le fonctionnement d'un dispositif du type décrit en relation avec la figure 1.

En figure 2, on considère une structure optique comprenant deux sous-ensembles de pixels 105₁ et 105₂, placés dans un même plan, respectivement en regard de sous-systèmes optiques 107₁ et 107₂. Dans cet exemple, les sous-ensembles de pixels 105₁ et 105₂ sont placés dans le plan focal objet des sous-systèmes optiques 107₁ et 107₂. Les sous-ensembles de pixels 105₁ et 105₂ et les sous-systèmes optiques 107₁ et 107₂ s'étendent symétriquement de part et d'autre de l'axe optique principal de la structure.

Dans cette figure, le but est de représenter la surface de chaque sous-ensemble de pixels effectivement vue par l'utilisateur lorsque l'axe optique de l'oeil de l'utilisateur coïncide avec l'axe optique principal de la structure, et que l'oeil de l'utilisateur est à une distance e des sous-systèmes optiques 107₁ et 107₂. La distance e, appelée trajet optique, est par exemple de l'ordre de 10 à 20 millimètres dans le cas d'un dispositif de type paire de lunettes du type décrit en relation avec la figure 1.

Comme cela est représenté en figure 2, seules une portion 202₁ du sous-ensemble de pixels 105₁ et une portion 202₂ du sous-ensemble de pixels 105₂ sont vues par l'oeil de l'observateur. Ainsi, si on considère un observateur dont l'oeil est immobile tel que celui de la figure 2, seules les portions 202₁ et 202₂ des sous-ensembles de pixels 105₁ et 105₂ sont utiles à l'observation. Le reste des sous-ensembles de pixels pourrait être déconnecté, ou encore les sous-ensembles de pixels pourraient être réduits à leurs seules portions 202₁ et 202₂ pour une même visibilité de l'information.

Les portions utiles 202₁ et 202₂ des sous-ensembles de pixels 105₁ et 105₂ ont une dimension approximativement égale à f*Len/e, Len étant le diamètre des sous-systèmes optiques 107₁ et 107₂. Les bords des portions utiles 202₁ et 202₂ des sous-ensembles de pixels, 105₁ et 105₂ sont situés à une distance d approximativement égale à Len/2 de l'axe optique principal de la structure. La distance bord à bord entre les portions utiles 202₁ et 202₂ des sous-ensembles de pixels 105₁ et 105₂ est approximativement égale au diamètre Len des sous-systèmes optiques.

En figure 3, on considère une structure comprenant trois sous-ensembles de pixels 105₁, 105₂ et 105₃, placés dans un même plan, respectivement en regard de sous-systèmes optiques 107₁, 107₂ et 107₃. Dans cet exemple, les sous-ensembles de pixels 105₁, 105₂ et 105₃ sont placés dans le plan focal objet des sous-systèmes optiques 107₁, 107₂ et 107₃. Le sous-afficheur central, formé par le sous-ensemble de pixels 105₂ et le sous-système optique 107₂, a son axé optique confondu avec l'axe optique principal de la structure, et les sous-afficheurs périphériques s'étendent de part et d'autre du sous-afficheur central, symétriquement par rapport à l'axe optique principal de la structure.

On considère le cas où l'axe optique de l'oeil de l'utilisateur coïncide avec l'axe optique principal de la structure, et où l'oeil de l'utilisateur est à une distance e du sous-système optique central 107₂.

Comme cela est représenté en figure 3, seules une portion 202₁ du sous-ensemble de pixels 105₁, une portion 202₂ du sous-ensemble de pixels 105₂, et une portion 202₃ du sous-ensemble de pixels 105₃ sont visibles par l'oeil. Ainsi, si on considère un observateur dont l'oeil est immobile tel que celui de la figure 3, seules les portions 202₁, 202₂ et 202₃ des sous-ensembles de pixels 105₁, 105₂ et 105₃ sont utiles à l'observation. Le reste des sous-ensembles de pixels pourrait être déconnecté, ou encore les sous-ensembles de pixels pourraient être réduits à leurs seules portions 202₁, 202₂ et 202₃ pour une même visibilité de l'information.

Les portions utiles 202₁, 202₂ et 203₃ des sous-ensembles de pixels 105₁, 105₂ et 105₃ ont une dimension sensiblement égale à f*Len/e, Len étant le diamètre des sous-systèmes optiques 107₁, 107₂ et 107₃. La portion utile 202₂ du sous-afficheur central est centrée sur l'axe optique principal de la structure, et les bords des portions utiles 202₁ et 202₃ des sous-afficheurs périphériques sont situés à une distance d' sensiblement égale à Len + f*Len/2e de l'axe optique principal de la structure. La distance bord à bord entre les portions utiles 202₁ et 202₂ d'une part, et 202₂ et 202₃ d'autre part, est approximativement égale au diamètre Len des sous-systèmes optiques.

Plus généralement, quelle que soit la position d'un sous-afficheur dans un afficheur comprenant un nombre pair ou impair de sous-afficheurs, la portion utile de la source d'images élémentaire de ce sous-afficheur (visible pour une position donnée de l'oeil), a une dimension approximativement égale à f*Len/e.

L'image que l'on souhaite afficher en réalité augmentée peut être divisée en blocs qui sont répartis sur les différents sous-afficheurs en fonction de la position de chaque sous-afficheur par rapport à l'axe optique principal de l'afficheur complet. Les sous-afficheurs en périphérie de l'afficheur sont utiles pour afficher des portions périphériques de l'image, et les sous-afficheurs au centre de l'afficheur sont utiles pour afficher des portions centrales de l'image. En pratique, chaque sous-afficheur 105ᵢ peut afficher la totalité de l'image, mais seule la partie de l'image correspondant à la partie utile 202ᵢ du sous-afficheur est vue par l'utilisateur. La partie du sous-afficheur non visible par l'utilisateur peut être désactivée. Dans ce cas, le sous-afficheur 105ᵢ ne projette qu'une partie de l'image.

Pour définir la surface utile de chacun des sous-ensembles de pixels en fonctionnement, il faut aussi tenir compte du fait que l'oeil de l'utilisateur est susceptible de bouger, selon une amplitude maximale que l'on prédéfinit. On considère ci-après, à titre d'exemple, le cas d'un mouvement exclusivement latéral de l'oeil. Cependant, les enseignements décrits s'appliquent aussi à un mouvement vertical de l'oeil.

On désigne par l'expression "boîte à oeil" ("eye box" en anglais) l'espace dans lequel l'oeil de l'observateur peut bouger tout en recevant l'intégralité de l'information. Le positionnement et la taille des sous-ensembles de pixels 105ᵢ peuvent être adaptés en fonction d'une boîte à oeil souhaitée prédéfinie. On appellera par la suite B l'amplitude maximale en mouvement de l'oeil acceptée, égale à la taille de la boîte à oeil.

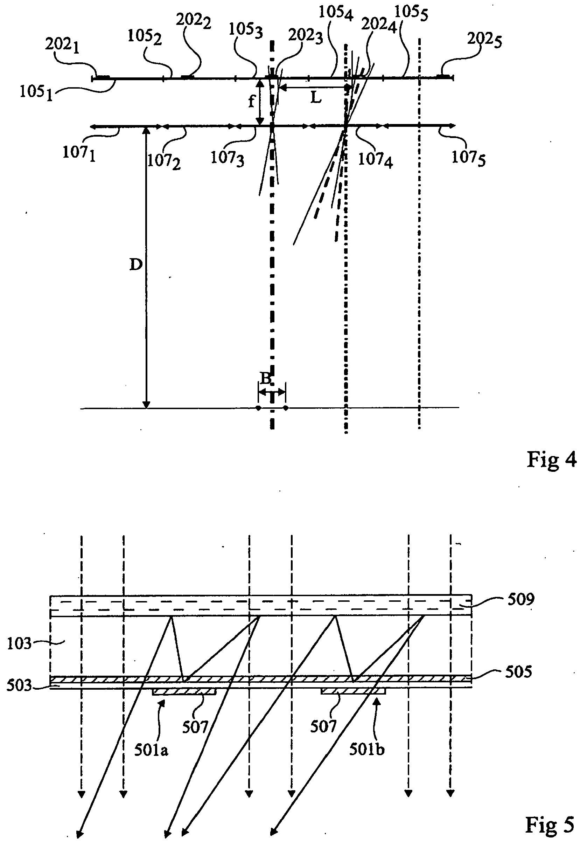

La figure 4 illustre une structure comprenant un nombre Q = 5 de sous-afficheurs comportant chacun un sous-ensemble de pixels (respectivement 105₁, 105₂, 105₃, 105₄ et 105₅) en regard d'un sous-système optique (respectivement 107₁, 107₂, 107₃, 107₄ et 107₅). Chaque sous-ensemble de pixels 105ᵢ a, dans cet exemple, une longueur approximativement égale à Len, et est centré sur l'axe optique du sous-système optique 107ᵢ auquel il est associé. Dans cet exemple, les sous-ensembles de pixels 105ᵢ sont placés dans le plan focal objet des sous-systèmes optiques 107ᵢ.

Dans le cas d'une boîte à oeil B nulle (le moindre mouvement de la tête de l'observateur implique une perte d'information), on a vu ci-dessus que les portions utiles 202ᵢ des sous-ensembles de pixels 105ᵢ présentent une longueur approximativement égale à f*Len/e et sont distants bord à bord d'une distance sensiblement égale à Len (les centres des portions utiles 202ᵢ sont ainsi distants d'environ Len + f*Len/e).

Dans le cas d'une boîte à oeil B non nulle, la portion visible de chaque sous-ensemble de pixels 105ᵢ, de dimension f*Len/e, se déplace lorsque l'oeil se déplace dans la boîte à oeil. Sur la figure 4, les traits pleins délimitent la zone du plan focal visible lorsque l'oeil se déplace à gauche dans la figure d'une distance B/2 et les traits en pointillées délimitent la zone du plan focal visible lorsque l'oeil se déplace à droite dans la figure d'une distance B/2. Si on veut voir une image complète quelle que soit la position de l'oeil dans la boîte à oeil, l'image doit être affichée sur des portions des sous-ensembles de pixels 105ᵢ positionnées et dimensionnées de façon à correspondre au champ de recouvrement des régions visibles aux deux extrémités de la boîte à oeil. Ainsi, les portions "utiles" 202ᵢ des sous-ensembles de pixels 105ᵢ doivent être agrandies d'une longueur fB/2e à gauche et d'une longueur fB/2e à droite par rapport au cas d'une boîte à oeil nulle. En d'autres termes, pour chaque sous-ensemble de pixels 105ᵢ, pour une position donnée de l'oeil dans la boîte à oeil, la portion du sous-ensemble 105ᵢ visible par l'oeil de l'utilisateur a une dimension de l'ordre de f*Len/e, et, lorsque l'oeil balaye tout l'espace de la boîte à oeil, la portion utile du sous-afficheur 105ᵢ qui est vue (balayée) par l'oeil a une dimension d'approximativement f*Len/e + f*B/e. Pour une même visibilité de l'information, le reste du sous-ensemble de pixels 105ᵢ pourrait être déconnecté, ou encore le sous-ensemble de pixels pourrait être réduit à sa seule portion utile 202ᵢ de longueur f*(Len+B)/e (la distance bord à bord des portions utiles 202ᵢ est alors inférieure à Len).

Dans un mode de réalisation préféré, pour obtenir une boîte à oeil de grande taille, les pixels de l'ensemble 105 sont régulièrement répartis selon une matrice de lignes et de colonnes s'étendant sensiblement sur toute la surface du support 103, les sous-systèmes optiques 107ᵢ recouvrant sensiblement toute la surface du support 103 opposée à l'ensemble 105, et chaque source d'images élémentaire 105ᵢ étant constituée par la portion de l'ensemble 105 située en regard du sous-système optique 107ᵢ correspondant. Ainsi, chaque sous-ensemble de pixels 105ᵢ occupe sensiblement toute la surface en regard du sous-système optique 107ᵢ auquel il est associé. De plus, chaque sous-ensemble de pixels 105ᵢ a de préférence une résolution au moins égale à celle de l'image que l'on souhaite afficher en réalité augmentée. En outre, la taille Len des sous-lentilles 107ᵢ est de préférence approximativement égale ou supérieure à la somme des portions utiles (visibles pour une position donnée de l'oeil) des sous-ensembles 105ᵢ, qui vaut approximativement Q*f*Len/e.

A titre d'exemple, on peut prévoir que chaque sous-ensemble de pixel 105ᵢ affiche la totalité de l'image. Pour une position donnée de l'oeil, l'utilisateur ne verra alors qu'une partie de l'image affichée par chacun des sous-afficheurs, l'image complète étant recombinée par les sous-systèmes optiques au niveau de l'oeil de l'utilisateur.

A titre de variante, on peut prévoir un dispositif d'affichage en réalité augmentée comprenant, outre les éléments susmentionnés, un dispositif de suivi de regard ("eye tracking" en anglais), permettant de connaître, à chaque instant, la position relative de l'oeil de l'utilisateur par rapport à l'axe optique principal du dispositif. Pour réduire la consommation électrique du dispositif, on peut alors prévoir de tenir compte de la position de l'oeil, pour n'alimenter que les pixels de l'ensemble 105 visibles par l'oeil (pour une position donnée de l'oeil). A titre d'exemple, on peut asservir l'alimentation des lignes et/ou colonnes de chaque sous-matrice 105ᵢ de pixels sur la mesure fournie par le dispositif de suivi du regard.

A titre d'exemple d'application numérique, on considère le cas d'une lame transparente 103 sensiblement carrée d'approximativement 21 mm de côté, d'épaisseur eₚ de l'ordre de 3 mm, et d'indice optique n sensiblement égal à 2. Dans cet exemple, on considère une distance oeil-lentille e d'approximativement 15 mm. La distance focale f des lentilles 107ᵢ, fixée ici par l'épaisseur et l'indice optique de la lame 103 est alors approximativement égale à 6 mm. Dans cet exemple, on prévoit des lentilles 107ᵢ d'ouverture x de l'ordre de 1,45, c'est-à-dire ayant un diamètre Len de l'ordre de f/x = 4,14 mm. De plus, on prévoit, dans cet exemple, une distance interpixel, dpix de l'ordre de 14 µm (centre à centre). Chaque sous-ensemble de pixels 105ᵢ occupant sensiblement la même surface que la lentille 107ᵢ qui lui est associée, la résolution de chaque sous-ensemble de pixels 105ᵢ est de l'ordre de Z = Len/dpix = 296 pixels (nombre de pixels par image dans une direction). On peut prévoir des pixels d'approximativement 5 µm de côté, ce qui permet d'obtenir l'effet de transparence recherché. En effet, la distance interpixels dpix étant de l'ordre de 14 µm dans cet exemple, il subsiste, entre pixels voisins, une distance de l'ordre de 14 - 5 = 9 µm, qui peut être laissée libre de tout élément opaque ou lumineux, et donc permettre la visualisation d'une scène extérieure à travers le dispositif. Pour une position donnée de l'oeil, la taille de la portion utile 202ᵢ de chaque sous-ensemble de pixels 105ᵢ est de l'ordre de f*Len/e = 1,66 mm. Le nombre minimum Qmin de lentilles 107ᵢ à prévoir (dans une direction) pour que l'utilisateur puisse percevoir la totalité de l'image est égal à l'arrondi supérieur de la valeur e/f = 2,5, soit 3 lentilles (3x3 = 9 lentilles sur la totalité de la lame 103) dans cet exemple. Le nombre maximum Qmax de lentilles 107ᵢ que l'on peut prévoir (dans une direction) sur la lame 103 est égal à l'arrondi inférieur de la longueur de la lame divisée par la taille Len des lentilles, soit 21/4,14 = 5,07, soit 5 lentilles (5x5 = 25 lentilles sur la totalité de la lame 103) dans cet exemple. Le champ de vision pour l'utilisateur est défini par la formule 2*arctan(1/2x), soit approximativement 38 degrés dans cet exemple. Si on désigne par SchV le surplus de champ visuel de part et d'autre de l'image, avec SchV = 0,5*((Q*f*Len/e) - Len), Q étant le nombre de lentilles de l'afficheur dans une direction, la boîte à oeil B peut être définie par la formule B=2e*SchV/f. Dans cet exemple, si on prévoit un nombre de lentilles dans une direction égal à Qmax, la boîte à oeil B est de l'ordre de 10,3 mm dans cette direction.

L'exemple numérique du paragraphe ci-dessus définit un exemple de réalisation d'un afficheur du type décrit en relation avec la figure 1 qui peut raisonnablement être envisagé. Les modes de réalisation décrits ne se limitent toutefois bien entendu pas à ce cas particulier. A partir des règles de conception énoncées ci-dessus, l'homme de l'art saura prévoir d'autres configurations que celle donnée dans cet exemple, par exemple en modifiant l'épaisseur eₚ de la lame transparente, l'indice de réfraction n de la lame transparente, la distance interpixel dpix, l'ouverture x des sous-systèmes optiques 107ᵢ, les dimensions en vue de dessus de la lame transparente, et/ou un ou plusieurs autres paramètres.

On notera que tout ce qui a été décrit ci-dessus en relation avec les figures 1 à 4 l'a été pour expliquer le principe de fonctionnement du dispositif d'affichage en réalité augmentée proposé. Toutefois, en pratique, pour éviter que l'image de la scène réelle vue par l'utilisateur soit déformée par les sous-systèmes optiques 107ᵢ, il est préférable que la lumière provenant de la scène réelle ne "voie" pas les sous-systèmes optiques 107ᵢ. Pour cela, une structure du type décrit en relation avec la figure 5 peut être utilisée.

La figure 5 est une vue en coupe partielle illustrant un exemple d'une variante de réalisation d'un dispositif d'affichage d'images en réalité augmentée, dans laquelle la lumière provenant de la scène réelle n'est pas impactée par les sous-systèmes optiques du dispositif.

Sur la figure 5, on a représenté une portion d'une lame support transparente 103. Dans cet exemple, des pixels d'affichage lumineux sont formés sur une face de la lame 103 tournée vers l'oeil de l'utilisateur. Sur la figure 5, seuls deux pixels 501a et 501b ont été représentés. Dans cet exemple, les pixels sont réalisés en technologie OLED et comprennent une ou plusieurs couches 503 de matériaux organiques entre deux électrodes conductrices 505 et 507. L'électrode 505 située du côté de la couche 503 opposé à l'oeil est transparente ou semi-transparente, et peut être constituée d'une fine couche d'argent dont l'épaisseur peut-être de l'ordre de quelques nanomètres. Lorsqu'une tension adaptée est appliquée entre les deux électrodes, un phénomène d'électroluminescence apparaît dans la couche organique. Les pixels 501a, 501b sont réalisés de façon à émettre de la lumière principalement en direction de la face de la lame 103 opposée aux pixels (c'est-à-dire vers l'intérieur de la lame), et à ne pas éclairer directement en direction de l'oeil.

Du côté de sa face opposée aux pixels 501a, 501b, la lame 103 est surmontée par un système optique 509 comprenant des lentilles holographiques réflectives. Les lentilles du système 509 focalisent la lumière provenant des pixels (c'est-à-dire de "l'intérieur" de la lame 103 (rayons en traits pleins sur la figure 5), mais n'ont pas d'effet focalisant sur la lumière provenant de la scène réelle, c'est-à-dire de "l'extérieur" du dispositif (rayons en traits interrompus sur la figure 5). Du point de vue optique géométrique, le système 509 est, pour la lumière provenant des pixels 501a, 501b, un système du type décrit en relation avec les figures 1 à 4, c'est-à-dire qu'il comprend une pluralité de sous-systèmes optiques adaptés à collimater les rayons émis par les pixels 501a, 501b, de façon que l'information affichée par les pixels soit perçue par l'utilisateur comme étant à la même distance que la scène réelle.

Un avantage des modes de réalisation proposés est qu'ils permettent d'obtenir un dispositif d'affichage d'images en réalité augmentée de type HMD, plus simple et plus compact que les dispositifs existants.

Un autre avantage est que la consommation électrique du dispositif d'affichage en réalité augmentée est réduite par rapport aux dispositifs existants.

Un autre avantage est que le dispositif proposé ne nécessite pas de réglage mécanique spécifique à une personne donnée.

Un autre avantage est que l'utilisateur peut avoir accès à toute l'information affichée en réalité augmentée sans que celle-ci ne bouge par rapport à la scène réelle, même lorsque l'oeil de l'utilisateur bouge.

Des modes de réalisation particuliers ont été décrits. Diverses variantes et modifications apparaîtront à l'homme de l'art.

En particulier, bien que l'on ait décrit, en relation avec la figure 1, un exemple de dispositif d'affichage d'images en réalité augmentée de type HMD se présentant sous la forme d'une paire de lunettes comprenant un afficheur semi-transparent devant chaque oeil, les modes de réalisation décrits ne se limitent pas à ce cas particulier.

A titre de première variante, on peut prévoir un dispositif d'affichage en réalité augmentée de type masque, comprenant un seul afficheur, par exemple centré sur le point milieu entre les deux yeux de l'utilisateur. Les règles de conception susmentionnées, qui correspondent au cas d'une vision monoculaire, doivent alors être adaptées aux contraintes supplémentaires d'une vision binoculaire. L'inventeur a montré que les raisonnements décrits ci-dessus, conduisant à la détermination des portions utiles des sous-ensembles de pixels dans une direction dans laquelle la vision est monoculaire avec une boîte à oeil non nulle, s'appliquent également au cas où la vision est binoculaire avec une boîte à oeil de dimension supérieure à la distance y entre les deux yeux de l'observateur. En vision binoculaire, par exemple dans la direction horizontale de l'observateur, si l'on souhaite une boîte à oeil nulle (B = 0), les portions utiles des sous-ensembles de pixels 105ᵢ présentent des dimensions de l'ordre de f*Len/e et sont distants bord à bord d'une distance Len, les centres des portions utiles étant distants d'une distance Len+f*Len/e. Les portions utiles des sous-afficheurs périphériques ont quant à elles une dimension égale à (Len+y/2)*(f/e). On notera que, dans la littérature, l'écart moyen y_{moy} entre les deux yeux d'une personne est compris entre 60 et 70 mm, typiquement de l'ordre de y_{moy} = 65 mm. Ainsi, en pratique, on pourra prendre y = y_{moy}. Si l'on souhaite une boîte à oeil égale à la distance y entre les yeux de l'observateur, les portions utiles de tous les sous-afficheurs ont une même longueur de l'ordre de f*Len/e et sont distants bord à bord d'une distance Len, les centres des portions utiles étant distants d'une distance égale à Len+f*Len/e. Si l'on souhaite une boîte à oeil B supérieure à la distance y entre les yeux de l'observateur, les portions utiles des sous-ensembles de pixels 105ᵢ sont centrées de la même façon que dans le cas d'une boîte à oeil égale à y, mais sont agrandies de (B-y)*f/2e de part et d'autre. Les portions utiles des sous-afficheurs présentent donc une dimension égale à (Len+B-y)*f/e. La distance bord à bord des portions utiles est donc inférieure à Len.

A titre de deuxième variante, on peut prévoir un dispositif d'affichage en réalité augmentée de type paire de lunettes, mais dans lequel un seul des deux yeux est équipé d'un afficheur semi-transparent du type décrit en relation avec la figure.

On notera que, dans le cas décrit ci-dessus où les deux yeux sont équipés d'un afficheur, on peut prévoir, selon les besoins, d'afficher devant les yeux gauche et droite une même image ou des images distinctes.

Par ailleurs, les modes de réalisation décrits ne se limitent pas à l'utilisation de pixels en technologie OLED. D'autres technologies pourront être utilisées.

## Revendications

1. Dispositif d'affichage d'une image en réalité augmentée de type HMD, comprenant :
un ensemble (105) de pixels d'affichage lumineux disposés sur une première face d'un support transparent (103) destiné à être positionné sur le trajet optique entre un oeil d'un utilisateur et une scène réelle à observer, cet ensemble (105) comprenant un nombre N entier supérieur à 1 de sous-ensembles (105ᵢ) de pixels comprenant chacun un nombre de pixels suffisant pour afficher la totalité de l'image ; et
un système optique (107) disposé sur une deuxième face dudit support (103) opposée à la première face, ce système (107) comprenant N sous-systèmes optiques (107ᵢ), chaque sous-ensemble (105ᵢ) de pixels étant en regard de l'un des sous-systèmes optiques (107ᵢ).

2. Dispositif selon la revendication 1 dans lequel, en vue de face, les sous-systèmes optiques (107ᵢ) voisins sont jointifs.

3. Dispositif selon la revendication 1 ou 2, dans lequel les pixels sont non jointifs et l'espacement interpixel est compatible avec la visualisation d'une scène réelle en transparence à travers le support (103).

4. Dispositif selon l'une quelconque des revendications 1 à 3, dans lequel, en vue de face, chaque pixel est placé dans une partie centrale d'une surface libre de tout autre pixel, de façon que la surface du support (103) effectivement occupée par les pixels ne dépasse pas 20 pourcents de la surface totale de la face du support (103) sur laquelle sont disposés les pixels.

5. Dispositif selon l'une quelconque des revendications 1 à 4, dans lequel, à un instant donné, seule une portion (202ᵢ) de chaque sous-ensemble (105ᵢ) de pixels, visible par l'oeil depuis une boîte à oeil déterminée, est activée.

6. Dispositif selon la revendication 5, dans lequel ladite portion (202ᵢ) a une dimension d'approximativement. f*(Len+B)/e, où f est la distance focale du sous-système optique (107ᵢ) correspondant, Len est le diamètre du sous-système optique (107ᵢ) correspondant, B est la dimension de la boîte à oeil, et e est le trajet optique entre le système optique (107) et l'oeil.

7. Dispositif selon la revendication 6, comprenant en outre un dispositif de suivi de regard permettant de connaître, à chaque instant, la position relative de l'oeil de l'utilisateur par rapport au dispositif d'affichage, et un circuit de contrôle adapté, dans chaque sous-ensemble (105ᵢ) de pixels, à activer ou désactiver des pixels en fonction de la position de l'oeil détectée.

8. Dispositif selon l'une quelconque des revendications 1 à 7, dans lequel chaque sous-ensemble (105ᵢ) de pixels s'étend sur une surface sensiblement égale à celle du sous-système optique (107ᵢ) en regard duquel il se trouve.

9. Dispositif selon l'une quelconque des revendications 1 à 8, dans lequel chaque sous-ensemble (105ᵢ) de pixels contient un nombre de pixels suffisant pour afficher une image d'approximativement 320 par approximativement 240 pixels.

10. Dispositif selon l'une quelconque des revendications 1 à 9, dans lequel le nombre Q de sous-systèmes optiques (107ᵢ), dans une direction donnée parallèle audit support (103), est au moins égal à l'entier supérieur à la valeur e/f, où e désigne le trajet optique entre le système optique (107) et l'oeil d'un utilisateur, et f désigne la distance focale des sous-systèmes optiques (107ᵢ).

11. Dispositif selon l'une quelconque des revendications 1 à 10, dans lequel les pixels dudit ensemble (105) de pixels sont disposés en matrice et régulièrement répartis sur toute la surface du support (103).

12. Dispositif selon l'une quelconque des revendications 1 à 11, dans lequel les pixels (501a, 501b) sont réalisés en technologie OLED.

13. Dispositif selon l'une quelconque des revendications 1 à 12, dans lequel ledit ensemble (105ᵢ) de pixels est dans le plan focal objet du système optique (107).

14. Dispositif selon l'une quelconque des revendications 1 à 13, dans lequel ledit support (103) est une lame transparente d'épaisseur inférieure ou égale à 3,5 millimètres.

15. Dispositif selon l'une quelconque des revendications 1 à 14, dans lequel ledit système optique (107) est réalisé sous la forme d'un hologramme réflectif (509).

16. Dispositif selon l'une quelconque des revendications 1 à 15, ayant la forme générale d'une paire de lunettes ou d'un masque.

## Patentansprüche

1. Eine Vorrichtung der HMD-Bauart zur Anzeige eines Bildes in einer vergrößerten Realität, wobei die Vorrichtung Folgendes aufweist:
eine Anordnung (105) aus Lichtanzeigepixeln, angeordnet auf einer ersten Oberfläche eines transparenten Trägers (103), vorgesehen zur Positionierung auf dem optischen Pfad zwischen dem Auge eines Benutzers und einer zur beobachtenden realen Szene, wobei diese Anordnung (105) eine Anzahl N, die größer ist als 1, von Pixelsubanordnungen (105ᵢ) aufweist, wobei jede eine hinreichende Anzahl von Pixeln zur Anzeige des gesamten Bildes aufweist; und
ein optisches System (107), angeordnet auf einer zweiten Oberfläche des Trägers (103), entgegengesetzt zur ersten Oberfläche, wobei dieses System (107) N optische Subsysteme (107ᵢ) aufweist, wobei jede Pixelsubanordnung (105ᵢ) auf eines der optischen Subsysteme (107ᵢ) hinweist bzw. gegenüber liegt.

2. Die Vorrichtung nach Anspruch 1, wobei in einer Vorderansicht die benachbarten optischen Subsysteme (107ᵢ) verbunden bzw. angrenzend sind.

3. Die Vorrichtung nach Anspruch 1 oder 2, wobei die Pixel nicht verbunden bzw. angrenzend sind und der Raum zwischen den Pixeln kompatibel ist mit der Visualisierung einer realen Szene in Transparenz durch den Träger (103).

4. Die Vorrichtung nach einem der Ansprüche 1 bis 3, wobei in Draufsicht jedes Pixel in einem Mittelteil einer Oberfläche platziert ist, die frei ist von irgendeinem anderen Pixel, so dass das Oberflächengebiet des Trägers (103), welches in effektiver Weise durch die Pixel besetzt ist, 20 % der Gesamtfläche der Oberfläche des Trägers (103), auf der die Pixel angeordnet sind, nicht übersteigt.

5. Die Vorrichtung nach einem der Ansprüche 1 bis 4, wobei zu einer gegebenen Zeit nur ein Teil (202ᵢ) jeder Pixelsubanordnung (105ᵢ), sichtbar mit dem Auge von einem bestimmten Augenfeld (eye box), aktiviert ist.

6. Die Vorrichtung nach Anspruch 5, wobei der erwähnte Teil (202ᵢ) eine Abmessung von annähernd f* (Len+B)/e besitzt, wobei f die Brennweite des entsprechenden optischen Subsystems (107ᵢ) ist, Len der Durchmesser des entsprechenden optischen Subsystems (107ᵢ) ist, B die Abmessung des Augenfeldes ist, und e der optische Pfad zwischen dem optischen System (107) und dem Auge ist.

7. Die Vorrichtung nach Anspruch 6, wobei ferner eine Augennachführvorrichtung vorgesehen ist, die es ermöglicht, dass zu jeder Zeit die relative Position des Auges des Benutzers bezüglich der Anzeigevorrichtung bekannt ist, und eine Steuerschaltung die in der Lage ist, in jeder Pixelsubanordnung (105i) Pixel entsprechend der detektierten Augenposition zu aktivieren oder zu deaktivieren.

8. Die Vorrichtung nach einem der Ansprüche 1 bis 7, wobei jede Pixelsubanordnung (105ᵢ) sich über eine Oberfläche im Wesentlichen gleich der des optischen Subsystems (107ᵢ) erstreckt, vor welchem es angeordnet ist....

9. Die Vorrichtung nach einem der Ansprüche 1 bis 8, wobei jede Subanordnung (105ᵢ) eine hinreichende Anzahl von Pixeln enthält, um ein Bild von annähernd 320 mal, ungefähr 240 Pixel anzuzeigen.

10. Die Vorrichtung nach einem der Ansprüche 1 bis 9, wobei die Anzahl Q optischer Subsysteme (107ᵢ) in einer gegebenen Richtung parallel zu dem Träger (103) mindestens gleich der ganzen Zahl ist, größer als der Wert e/f, wobei e den optischen Pfad zwischen dem optischen System (107) und einem Auge eines Nutzers bezeichnet und f die Brennweite der optischen Subsysteme (107ᵢ) bezeichnet.

11. Die Vorrichtung nach einem der Ansprüche 1 bis 10, wobei die Pixel der erwähnten Pixelanordnung (105) in einer Anordnung und regelmäßig verteilt über die gesamte Oberfläche des Trägers (103) angeordnet sind.

12. Die Vorrichtung nach einem der Ansprüche 1 bis 11, wobei die Pixel (501 a, 501 b) in OLED Technologie geformt sind.

13. Die Vorrichtung nach einem der Ansprüche 1 bis 12, wobei die erwähnte Pixelanordnung (105ᵢ) in der Objekt-Brennebene des optischen Systems (107) liegt.

14. Die Vorrichtung nach einem der Ansprüche 1 bis 13, wobei der erwähnte Träger (103) eine transparente Platte ist mit einer Dicke kleiner als oder gleich 3,5 mm.

15. Die Vorrichtung nach einem der Ansprüche 1 bis 14, wobei das optische System (107) in der Form eines reflektierenden Hologramms (509) hergestellt ist.

16. Die Vorrichtung nach einem der Ansprüche 1 bis 15, die die allgemeine Form von Brillengläsern oder einer Maske aufweist.

## Claims

1. An HMD-type device for displaying an image in augmented reality, comprising:
an assembly (105) of light display pixels arranged on a first surface of a transparent support (103) intended to be positioned on the optical path between a user's eye and a real scene to be observed, this assembly (105) comprising a number N greater than 1 of pixel sub-assemblies (105ᵢ), each comprising a sufficient number of pixels to display the entire image; and
an optical system (107) arranged on a second surface of said support (103) opposite to the first surface, this system (107) comprising N optical sub-systems (107ᵢ), each pixel sub-assembly (105ᵢ) facing one of the optical sub-systems (107ᵢ).

2. The device of claim 1, wherein, in front view, neighboring optical sub-systems (107ᵢ) are contiguous.

3. The device of claim 1 or 2, wherein the pixels are non contiguous and the space between pixels is compatible with the visualizing of a real scene in transparency through the support (103).

4. The device of any of claims 1 to 3, wherein in top view, each pixel is placed in a central portion of a surface free of any other pixel, so that the surface area of the support (103) effectively occupied by the pixels does not exceed 20 percents of the total area of the surface of the support (103) having the pixels arranged thereon.

5. The device of any of claims 1 to 4, wherein, at a given time, only a portion (202ᵢ) of each pixel sub-assembly (105i), visible with the eye from a determined eye box, is activated.

6. The device of claim 5, wherein said portion (202ᵢ) has a dimension of approximately f*(Len+B)/e, where f is the focal distance of the corresponding optical sub-system (107ᵢ), Len is the diameter of the corresponding optical sub-system (107ᵢ), B is the dimension of the eye box, and e is the optical path between the optical system (107) and the eye.

7. The device of claim 6, further comprising an eye tracking device enabling to know, at any time, the relative position of the user's eye with respect to the display device, and a control circuit capable, in each pixel sub-assembly (105ᵢ), of activating or deactivating pixels according to the detected eye position.

8. The device of any of claims 1 to 7, wherein each pixel sub-assembly (105ᵢ) extends over a surface substantially equal to that of the optical sub-system (107ᵢ) in front of which it is located.

9. The device of any of claims 1 to 8, wherein each sub-assembly (105ᵢ) contains a sufficient number of pixels to display an image of approximately 320 by approximately 240 pixels.

10. The device of any of claims 1 to 9, wherein number Q of optical sub-systems (107ᵢ), in a given direction parallel to said support (103), is at least equal to the integer greater than value e/f, where e designates the optical path between the optical system (107) and a user's eye, and f designates the focal distance of the optical sub-systems (107ᵢ).

11. The device of any of claims 1 to 10, wherein the pixels of said pixel assembly (105) are arranged in an array and regularly distributed over the entire surface of the support (103).

12. The device of any of claims 1 to 11, wherein the pixels (501a, 501b) are formed in OLED technology.

13. The device of any of claims 1 to 12, wherein said pixel assembly (105ᵢ) is in the object focal plane of the optical system (107).

14. The device of any of claims 1 to 13, wherein said support (103) is a transparent plate having a thickness smaller than or equal to 3.5 millimeters.

15. The device of any of claims 1 to 14, wherein said optical system (107) is made in the form of a reflective hologram (509).

16. The device of any of claims 1 to 15, having the general shape of eyeglasses or of a mask.
